# EUROPEAN PATENT APPLICATION

(11) **EP 3 578 805 A1**
(43) Date of publication of application: **11.12.2019**
(21) Application number: 18761462.3
(22) Date of filing: 28.02.2018
(51) Int. Cl.: F03B 13/12, F03B 11/00, F03B 13/10

(54) **OCEAN ENERGY GENERATION DEVICE AND OCEAN ENERGY GENERATION WATER LEAKAGE PROTECTION DEVICE THEREOF**

(30) Priority: 28.02.2017 CN 201710114124; 02.05.2017 CN 201710302145
(71) Applicant: Hangzhou Lindong New Energy Technology Inc., Hangzhou, Zhejiang 310053 (CN)
(72) Inventor: LIN, Dong, Hangzhou Zhejiang 310053 (CN)
(74) Representative: Loo, Chi Ching
(86) International application number: PCT/CN2018/077691
(87) International publication number: WO 2018/157829

(57) **Abstract**

An ocean energy power generation water leak-proof device (5) includes a water storage tank (51) and a water pump (53). Water leaking into the ocean energy power generation device from the external is accumulated by the water storage tank (51), and is pumped by the water pump (53) to the external of the ocean energy power generation device. An ocean energy power generation device includes a generator 1, at least one horizontal-axis hydro turbine (2), a sealed cabin (3), a sealing ring (4) and at least one water leak-proof device (5). The hydro turbine is effectively prevented from damage caused by water leaking into the interior of the horizontal-axis hydro turbine.

## Description

### TECHNICAL FIELD

The present disclosure belongs to the field of ocean energy power generation, and particularly relates to an ocean energy power generation device and an ocean energy power generation water leak-proof device thereof.

### BACKGROUND

Ocean energy (including tide energy, tidal current energy, wave energy, ocean current energy) refers to the energy generated by the flowing of seawater. As a kind of renewable energy, the ocean energy is rich in reserves and is widespread thereby possessing excellent development prospects and value. The ocean energy is mainly applied to power generation, the working principle of which is similar to that of wind power generation, namely converting the mechanical energy of seawater into electric energy through energy conversion devices. Specifically, firstly the seawater impacts the hydro turbine, and the hydro turbine converts the energy of the water current into rotational mechanical energy. Then the hydro turbine drives the generator for power generation through the mechanical transmission system, and finally converts the rotational mechanical energy into electrical energy.

Nowadays, with the increasing shortage of energy and the increasing serious green house effect, energy is required to be low-carbon. Hence, the clean energy, such as the wind energy and the ocean energy, is the future direction of energy development. Among the power generation devices utilizing these clean energy sources, the power generation device utilizing the wind energy is relatively mature, but the power generation device utilizing the ocean energy is still in an initial stage. Universal and mature devices are not available. Due to the complex circumstances in the ocean, the ocean energy power generation device needs to be maintained more frequently than other power generation devices, resulting in high maintenance costs.

There are two types of generators commonly used for ocean energy power generation. One is a horizontal-axis hydraulic generator, the axis of which is parallel to the horizontal plane, and the other one is a vertical-axis hydraulic generator, the axis of which is perpendicular to the horizontal plane. The horizontal-axis hydraulic generator is highly required for the sealing of the entire body because all the electrical components (including the impeller rotor, the generator, the gearbox, the speed increasing box, etc.) thereof are located underwater. Especially the connection portion between the impeller rotor and the gearbox is required to be sealed with sealing rings. Further, in order to ensure the sealing property of the sealing rings, the sealing rings should be replaced at least once every three years due to the aging and looseness problems thereof. The entire ocean energy power generation device must stop operation when the sealing rings are replaced. In order to install the new sealing rings, other components also need to be disassembled and removed accordingly, which greatly increases the difficulty of replacement and the maintenance cost.

Particularly, since the maintenance personnel rarely submerges to check whether the sealing rings are aging and secure or not, they fail to know when the sealing rings need to be replaced. In order to prevent the hydro turbine from damage caused by the leakage of water flowing into the interior of the horizontal-axis hydro turbine, for the sake of safety, the sealing rings need to be replaced annually or semiannually even though the sealing rings have not aged yet. The power generation has to be stopped during repair and maintenance, which brings potential economic losses. Also, it is costly and arduous to perform the repair and maintenance operation, and the frequent repair and maintenance will impinge on the commercialization of ocean energy power generation.

In addition, after a period of use, the gearbox connected to the generator need to have the engine oil changed, and the bearing used in the power generation device also need to have the engine oil changed. Thus, the repair and maintenance of the horizontal-axis hydraulic generator is more difficult and costly, and even if the horizontal-axis hydraulic generator has higher power generation efficiency than the vertical-axis hydraulic generator, the commercialization of the horizontal-axis hydraulic generator is still very hard.

With the increase of water depth, the pressure increasingly rises. Since the external pressure of the generator set is much greater than the internal pressure, the external water may readily leak into the generator set to harm the generator set. In order to enhance the pressure resistance and the sealing performance of the generator set, the higher requirement for the strength and structural sealing performance of the generator set housing is proposed, and some common sealing rings cannot meet the sealing requirements in the deep sea at all. Therefore, a special sealing ring is required, which leads to an increase in production costs. On the other hand, in order to increase the pressure resistance and the sealing performance of the generator set, the volume of the generator set needs to be further shrunk so that all components (the speed increasing box, the transmission component, the generator, etc.) in the generator set are closely arranged, which increases the friction between the components and greatly affects the efficiency of the generator set.

The existing ocean energy power generation device cannot solve the problem of completely sealing. In the existing ocean energy power generation device, only one hydraulic generator is provided in the water depth direction to avoid the sealing difficulties caused by the high pressure in the deep water. However, in this way, the ocean energy in deep water is underutilized.

On the other hand, the tidal current energy power generation device can use the tidal current in the ocean for power generation. Due to the flood tide and the ebb tide, the direction of the tidal current will change. Most of the conventional horizontal-axis hydraulic generators cannot be rotated, so the tidal current generators can only generate electricity utilizing the flood tide or the ebb tide, and the power generation efficiency thereof is extremely low. The person skilled in the prior art choose to install two power generation systems to make full use of the energy generated by the flood tide and the ebb tide. The impeller of one power generation system faces the direction of the flood tide, and the impeller of the other power generation system faces the direction of the ebb tide. It appears that the energy generated by the flood tide and the ebb tide is fully utilized, but actually one of the two power generation systems always does not work during the flood tide or the ebb tide. The addition of another power generation system doubles the production cost, and the increase in power generated by the additional power generation system fails to offset the increase in cost, which greatly hinders the popularization and application of the ocean energy power generation devices.

### SUMMARY

In order to overcome at least one of the deficiencies in the prior art, the present disclosure provides an ocean energy power generation device and an ocean energy power generation water leak-proof device thereof.

In order to achieve one objective of the present disclosure, the present disclosure provides an ocean energy power generation water leak-proof device including a water storage tank and a water pump. Water leaking from the external into the ocean energy power generation device is accumulated in the water storage tank, and the water in the water storage tank is pumped out of the ocean energy power generation device by the water pump.

In an embodiment of the present disclosure, the ocean energy power generation water leak-proof device may further include a liquid level sensor which is arranged corresponding to the water storage tank to detect the water level in the water storage tank. When the liquid level sensor detects that the water level in the water storage tank reaches the preset value, the water pump operates to pump the water in the water storage tank out of the ocean energy power generation device.

In an embodiment of the present disclosure, the water storage tank may be provided with a through hole to allow lines to pass therethrough.

In order to achieve another objective of the present disclosure, the present disclosure also provides an ocean energy power generation device comprising a generator, at least one horizontal-axis hydro turbine, a sealed cabin, a sealing ring and at least one water leak-proof device. The horizontal-axis hydro turbine includes an impeller rotor and a transmission module, and the kinetic energy generated by the rotation of the impeller rotor is transmitted to the generator through the transmission module. The transmission module is located in the sealed cabin and the impeller rotor is located outside the sealed cabin. The sealing ring is arranged at the connection portion of the impeller rotor and the sealed cabin. The water leak-proof device is arranged corresponding to the horizontal-axis hydro turbine and includes a water storage tank and a water pump. Water leaked from the external into the ocean energy power generation device is accumulated by the water storage tank, and the water in the water storage tank is pumped by the water pump to the external of the ocean energy power generation device.

In an embodiment of the present disclosure, the water leak-proof device may further include a liquid level sensor arranged corresponding to the water storage tank to detect the water level in the water storage tank. When the liquid level sensor detects that the water level in the water storage tank reaches the preset value, the pump operates to pump the water from the water storage tank to the external of the ocean energy power generation device.

In an embodiment of the disclosure, the generator may be located in the sealed cabin.

In an embodiment of the disclosure, the generator may be located above the water surface.

In an embodiment of the disclosure, the ocean energy power generation device may further include a variable angle transmission mechanism configured to connect the horizontal-axis hydro turbine and the generator and to transmit the kinetic energy generated by the horizontal-axis hydro turbine to the generator.

In an embodiment of the disclosure, the ocean energy power generation device may further include at least one outer shaft communicating with the sealed cabin. During rotation, the outer shaft drives the horizontal-axis hydro turbine to change an orientation.

In an embodiment of the disclosure, the ocean energy power generation device may further include a motor connected to the outer shaft to drive the outer shaft to rotate.

In an embodiment of the disclosure, the ocean energy power generation device may further include a pressurization tube communicating with an interior of the outer shaft to increase the pressure in the outer shaft and the sealed cabin, so that the air pressure in the outer shaft and the sealed cabin is higher than the pressure of the external seawater.

In an embodiment of the disclosure, the number of the horizontal-axis hydro turbines and water leak-proof devices may be both greater than or equal to two.

In an embodiment of the disclosure, the ocean energy power generation device may further include at least one outer shaft, one end of the outer shaft communicates with the sealed cabin, and the other end of the outer shaft may be located above the water surface.

In an embodiment of the disclosure, the outer shaft may have a specific inner diameter width to allow the maintenance personnel or maintenance machine to enter the sealed cabin through the outer shaft for maintenance.

In an embodiment of the disclosure, the ocean energy power generation device may further include a water stop ring located on the side of the impeller rotor facing toward the sealed cabin.

In an embodiment of the disclosure, the ocean energy power generation device further includes a plurality of blade sealing rings. The impeller rotor includes a plurality of blades and a hub, and each blade sealing ring is arranged at the connection portion of each blade and the hub.

In summary, the present disclosure is provided with a water leak-proof device. Even if the sealing ring is slightly aging and loose to allow water to leak from the loose position of the sealing ring, the leaking water in the ocean energy power generation device will certainly not spread to the generator and the transmission module located in the sealed cabin of the horizontal-axis hydro turbine, thereby effectively ensuring the safety of the horizontal-axis hydro turbine and generator. Finally, the frequency of repairing and replacing the sealing ring can be reduced, so as to minimize the cost of maintenance and replacement. Consequently, the normal power generation period of the ocean energy power generation device can be prolonged, the production benefits can be ensured, and the commercial application of the ocean energy power generation device can be boosted.

Besides, in the ocean energy power generation device provided in the embodiment, the power generating part of the conventional horizontal-axis hydraulic generator and other electrical components, such as speed increasing boxes, can be lifted from underwater to above the water surface by the transmission module and the variable angle transmission mechanism. Although the variable angle transmission mechanism has already existed in the mechanical field, in the field of ocean energy power generation, the persons skilled in the art have never considered that the power generating part of the horizontal-axis generator can be separated from the hydro turbine and can be lifted above the water surface. Those skilled in the art are limited by the inherent mode to fall into the technical prejudice that only the power generating part of the vertical-axis hydraulic generator can be arranged above the water surface, and the generation power can merely be improved by improving the design and arrangement of the blades in the horizontal-axis hydraulic generator. The present disclosure is directed to overcoming this technical prejudice and solves the problem that the horizontal-axis hydraulic generator in the prior art has difficulty in maintenance and replacement and high cost since all the electrical components are in the water. The power generating part in the embodiment is located above the water surface (other electrical components such as the speed increasing box can also be arranged above the water surface as needed). Therefore, the subsequent maintenance of the power generation device is conducted above the water surface, which greatly reduces the maintenance cost and further promotes the commercial application and popularization of ocean energy power generation devices.

Particularly, in an embodiment of the present disclosure, the outer shaft has a sufficient width and one end of the outer shaft is located above the water surface, so that the maintenance personnel or the maintenance machine can enter the interior of the ocean energy power generation device from the water surface through the outer shaft, and finally enter the sealed cabin to repair and maintain all electrical components in the sealed cabin (including but not limited to the gearbox, the speed increasing box, and the generator) and change engine oil for the bearings and the gearbox and other components. In such an arrangement, the entire horizontal-axis hydro turbine is not required to be lifted above the water surface for maintenance, and the whole maintenance process proceeds under the water surface (also isolated from the water), which reduces the manpower and material resources required for maintenance and greatly cuts down the maintenance cost. Furthermore, some components can be directly repaired and maintained without disassembly, which greatly decreases the difficulty of maintenance. In addition, the maintenance personnel or maintenance machines can easily enter into the interior of the power generation device to inspect the electrical element problems, and find problems as early as possible, which overcomes the problem in the prior art that the deficiencies cannot be inspected in advance or must be inspected after power generation is stopped.

The above and other objects, features, and advantages of the present disclosure will become more apparent and understood by the preferred embodiments with reference to the drawings, the detailed description is as follows:

### BRIEF DESCRIPTION OF THE DRAWINGS

Fig. 1 is a schematic diagram of the ocean energy power generation device according to the first embodiment of the present disclosure;
Fig. 2 is a schematic diagram of the ocean energy power generation device according to the second embodiment of the present disclosure;
Fig. 3 is a schematic diagram of the ocean energy power generation device according to the third embodiment of the present disclosure; and
Fig. 4 is a schematic diagram of the ocean energy power generation device according to the fourth embodiment of the present disclosure.

### DETAILED DESCRIPTION OF THE EMBODIMENTS

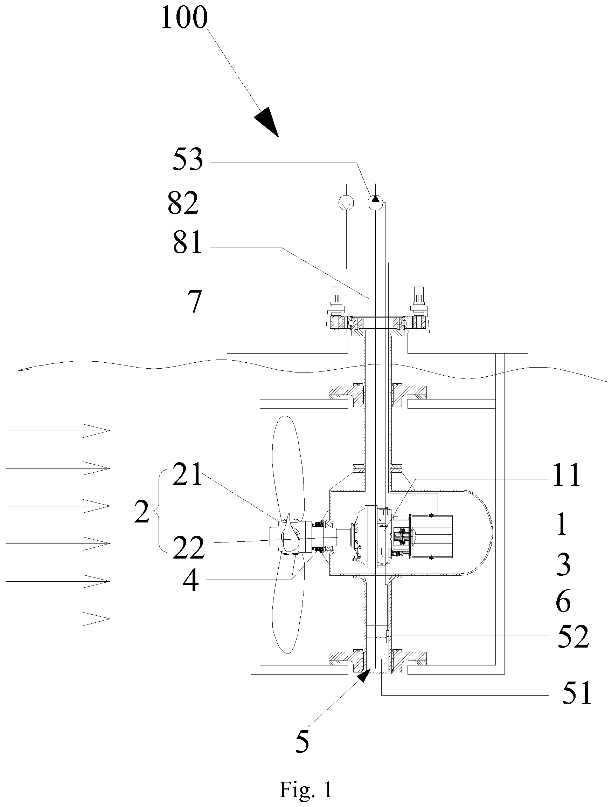

Fig. 1 is a schematic diagram of the ocean energy power generation device according to the first embodiment of the present disclosure. As shown in Fig. 1, the ocean energy power generation device 100 according to the first embodiment of the present disclosure includes a generator 1, at least one horizontal-axis hydro turbine 2, a sealed cabin 3, a sealing ring 4, and at least one water leak-proof device 5.

The horizontal-axis hydro turbine 2 includes an impeller rotor 21 and a transmission module 22, and the kinetic energy generated by the rotation of the impeller rotor 21 is transmitted to the generator 1 through the transmission module 22. The transmission module 22 is located in the sealed cabin 3, and the impeller rotor 21 is located outside the sealed cabin 3. The sealing ring 4 is arranged at the connection portion of the impeller rotor 21 and the sealed cabin 3.

The water leak-proof device 5 is disposed corresponding to the horizontal-axis hydro turbine 2 and includes a water storage tank 51 and a water pump 53. The water storage tank 51 accumulates the water leaking from the external into the ocean energy power generation device 100. The water pump 53 pumps the water in the water storage tank 51 to the external of the ocean energy power generation device 100.

In the present embodiment, the water leak-proof device 5 further includes a liquid level sensor 52. The liquid level sensor 52 is arranged corresponding to the water storage tank 51 to detect the water level in the water storage tank 51. When the liquid level sensor 52 detects that the water level in the water storage tank 51 reaches the preset value, the water pump 53 operates to pump the water in the water storage tank 51 to the external of the ocean energy power generation device 100. By means of the liquid level sensor 52, the water pump 53 can judge whether to work or not according to the actual situation, thereby saving the implementation cost. However, this invention is not limited thereto. In other embodiments, the water leak-proof device 5 may not include the liquid level sensor 52. The water pump can periodically pump water from the water storage tank 51 in a timing manner. In this way, the water pump can still effectively ensure the accumulated water in the water storage tank is discharged in time without the liquid level sensor.

There is no limit to the type of the liquid level sensor 52 in the present disclosure. The liquid level sensor 52 can be a contact sensor, such as a float type liquid level transducer, a magnetic liquid level transducer, a capacitive liquid level transducer, etc., which is arranged inside the water storage tank 51. The liquid level sensor 52 can also be a non-contact sensor, such as an ultrasonic liquid level transducer, a radar liquid level transducer, etc., which is arranged outside the water storage tank 51.

The water leaking into the interior of the power generation device flows downward owing to gravity, and therefore the water storage tank 51 of the present disclosure is arranged below the horizontal-axis hydro turbine 2. However, the word "below" referred in the present disclosure is not limited to a position uprightly under the horizontal-axis hydro turbine 2, and the present disclosure does not limit the specific position of the water storage tank 51. In the present embodiment, the water storage tank 51 is located uprightly below the bottom opening of the sealed cabin 3. When the sealing ring 4 ages and loosens, the external water flow will leak from the gap of the sealing ring 4 and flow into the interior of the sealed cabin 3. Under the action of gravity, the leaking water is accumulated into the water storage tank 51 along the sealed cabin 3. As the accumulate water increases, the liquid level of the accumulated water will rise. When the water level reaches the preset value, e.g. 5cm, the liquid level sensor 52 sends a signal to the water pump 53 at this moment, and the water pump 53 starts working. The water pump 53 communicates with the water storage tank 51 by a water pipe, and the water in the water storage tank 51 is pumped out through the water pipe, so as to lower the water level in the water storage tank 51.

In this embodiment, the water pump 53 is controlled to work or stop by means of the detection of the liquid level sensor 52. For example, when the liquid level sensor 52 detects that the water level reaches the preset value, the water pump 53 receives a signal to start working to pump water; when the liquid level sensor 52 detects that the water level reaches another preset value, e.g. 0 or 1cm, the liquid level sensor 52 can output the stop signal to the water pump 53, and then the water pump 53 stops working.

However, in the present disclosure, there is no limit to how the water pump 53 is controlled to stop working. In other embodiments, since the pumping amount per minute of the water pump 53 is predictable, the working time of the water pump 53 can be directly preset. For example, when the liquid level sensor 52 detects that the water level reaches the preset value, the water pump 53 starts working to pump water at this moment; the water pump 53 can be preset to merely work for one minute each time, i.e. the water pump 53 will stop working after working for one minute. In this way, by controlling the time when the water pump 53 stops working, the water level in the water storage tank 51 can similarly be diminished to be less than the preset value.

There is no limit to the setting position of the water pump 53 in the present disclosure. In the present embodiment, the water pump 53 is located above the water surface. In other embodiments, the water pump 53 can be located inside the sealed cabin.

By arranging the water leak-proof device 5 in the present disclosure, even if the sealing ring 4 is slightly aging, and water leaks from the external, the leaking water in the ocean energy power generation device 100 will certainly not spread to the generator 1 and the transmission module 22 located in the sealed cabin 3 of the horizontal-axis hydro turbine 2, thereby effectively ensuring the safety of the horizontal-axis hydro turbine 2 and the generator 1. Finally the frequency of repairing and replacing the sealing ring 4 can be reduced, so that the cost of maintenance and replacement is highly cut down, the normal power generation period of the ocean energy power generation device can be prolonged, the production benefits can be ensured, and the commercial application of the ocean energy power generation device is boosted.

In the present embodiment, the generator 1 is located inside the sealed cabin 3, namely the generator 1 is also located below the water surface. A speed increasing box 11 is connected between the generator 1 and the transmission module 22 of the horizontal-axis hydro turbine 2. Therefore, in the present embodiment, not only the transmission module 22 and the generator 1, but also the speed increasing box 11 and other electrical components can be protected.

In the present embodiment, the ocean energy power generation device 100 further includes at least one outer shaft 6 communicating with the sealed cabin 3. The outer shaft 6 rotates to drive the horizontal-axis hydro turbine 2 to change an orientation. In the present embodiment, the other end of the outer shaft 6 is located above the water surface P. In the present embodiment, the ocean energy power generation device 100 further includes a motor 7 connected to the outer shaft 6 to drive the outer shaft 6 to rotate. Since the flow directions of the flood tide and the ebb tide are opposite, regardless of which direction the water flow flows toward, the blades of the horizontal-axis hydro turbine 2 can be always controlled to orient toward the water flow by rotating the outer shaft 6, thereby improving the utilization of the ocean energy and improving the power generation efficiency.

In the present disclosure, the motor 7 is located above the water surface. In the prior art, a few of horizontal-axis hydraulic generators can change the orientation, but the motors are all located below the water surface, and some are even integrated with the generator set. Considering the control system, the drive system, the transmission system, the converter system and the power generation system in the prior art are all integrated behind the blades to form an entirety, the volume of the non-blade portion of the existing horizontal-axis hydraulic generator is massive, which greatly reduces the performance of the electrical components. Furthermore, the transmission system and the motor are susceptible to damage and require regular maintenance. If these components are provided under the water surface, then the difficulty and cost of maintenance will greatly rise. However, the motor 7 in the present disclosure is located above the water surface rather than below the water surface, which completely solves the above problems and greatly reduces the volume of the non-blade portion of the horizontal-axis hydraulic generator. Thus, the performance of the electrical components is improved, and finally the purpose of improving the power generation efficiency can be achieved.

In the present embodiment, the number of the motor 7 is identical to the number of the outer shaft 6. However, the present disclosure is not limited thereto. In other embodiments, one motor 7 can control two outer shafts 6 by a transmission mechanism such as a gear. Each motor 7 may include an electric motor and a transmission mechanism, and the transmission mechanism is connected to one end of the outer shaft 6, and the motor 7 drives the outer shaft 6 to rotate by the transmission mechanism. However, there is no limit to this in the present disclosure. In other embodiments, the motor 7 can include an electric motor and a reducer. Since the speed of the existing motor is relatively fast, the speed can be greatly reduced by the reducer, which effectively and accurately controls the rotation speed and the rotation range of the outer shaft 6.

In practical applications, when the water flows to the ocean energy power generation device 100 in the direction of the water flow shown in Fig. 1, the motor 7 does not work. At this moment, the blades of the horizontal-axis hydro turbine 2 face the water flow. When the water flows in the opposite direction of the water flow direction (from right to left as shown in Fig. 1) to the ocean energy power generation device 100, the motor 7 drives the outer shaft 6 to rotate. As a result, the horizontal-axis hydro turbine 2 is driven to rotate 180 degrees, which changes the orientation of the blades from left to right to ensure that the blades of the horizontal-axis hydro turbine 2 always face toward the water flow. This is especially suitable for tide power generation, the maximum power generation output can be assured.

Particularly, the flow direction of the flood tide and the ebb tide in the actual application is not completely parallel and not perpendicular to the water facing surface of the horizontal-axis hydro turbine 2 either. Regardless of the direction from which the water flows into the horizontal-axis hydro turbine 2, the ocean energy power generation device of the present embodiment can control the horizontal-axis hydro turbine 2 to change the orientation through the outer shaft 6 so that the horizontal-axis hydro turbine 2 can be always facing toward the water flow, thereby maximizing the utilization of ocean energy and increasing the generated power.

In addition, when the actual water flow speed is higher than the rated speed corresponding to the maximum load which the horizontal-axis hydro turbine 2 can bear, only the outer shaft 6 is rotated to control the horizontal axis turbine 2 to rotate away from the water flow direction by an angle. Accordingly, the load of the horizontal-axis hydro turbine 2 is effectively reduced, while ensuring that the horizontal-axis hydro turbine 2 will not break down due to overload and still work normally to sustainably and stably output the power generation. In the conventional ocean energy power generation device, the generator must stop working to avoid burning when the water flow speed is too large. In the present disclosure, this kind of disadvantage can be overcome without adjusting the pitch of the blades, the load adjustment of the generator is simpler and more effective. When the actual water flow speed is lower than the rated speed corresponding to the maximum load which the horizontal-axis hydro turbine 2 can bear, the horizontal-axis hydro turbine 2 is controlled by rotating the outer shaft 6 to rotate and face toward the water flow direction (i.e. the water facing surface of the blades is perpendicular to the water flow direction), which maximizes the utilization of water flow for power generation and increase the generated power.

In the present embodiment, the ocean energy power generation device 100 further includes a pressurization tube 81 communicating with an interior of the outer shaft 6 to increase the pressure in the outer shaft 6 and the sealed cabin 3, so that the air pressure in the outer shaft 6 and the sealed cabin 3 is greater than the pressure of the external seawater. One end of the pressurization tube 81 communicates with an air pump 82, and the other end is disposed inside the outer shaft 6. Since the air pump 82 communicates with the outer shaft 6, the air pump 82 can control to increase or decrease the pressure in the outer shaft 6, thereby controlling the pressure in the outer shaft 6 to be greater than the external pressure. In this way, the common sealing ring can be arranged to block the external water from entering the outer shaft 6 and the sealed cabin 3, which effectively protects the electrical components in the outer shaft 6 in a sealing way, and resolves the problem that the existing horizontal-axis hydraulic generator cannot work in the deep water or the work efficiency is low. Moreover, it becomes possible to make full use of the ocean energy in the water depth direction, so as to improve the power generation efficiency and overcome the problem that the existing ocean energy power generation devices cannot be made "deep".

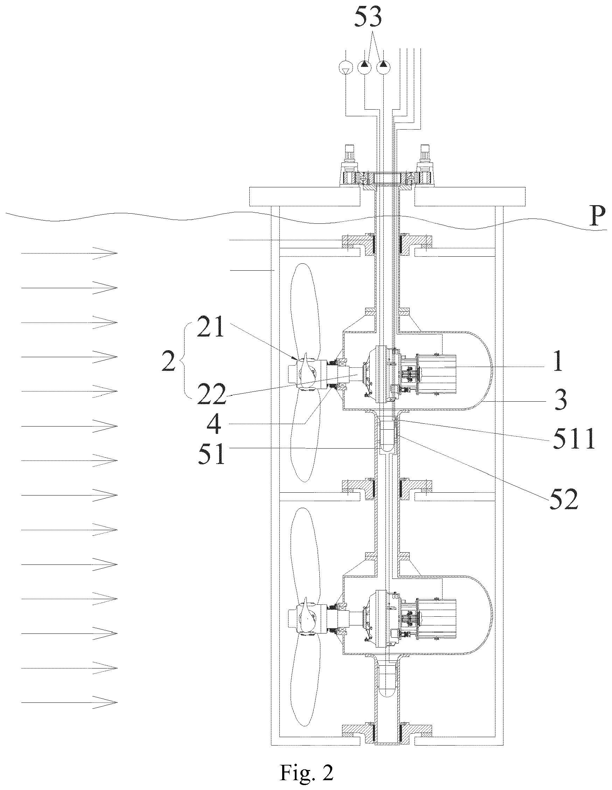

Fig. 2 is a schematic diagram of the ocean energy power generation device according to the second embodiment of the present disclosure. The generator 1, the horizontal-axis hydro turbine 2, the sealed cabin 3, the sealing ring 4, and the water leak-proof device 5 of the present embodiment are the same as those of the first embodiment, and the same elements are given the same reference numerals. Only the differences are described below.

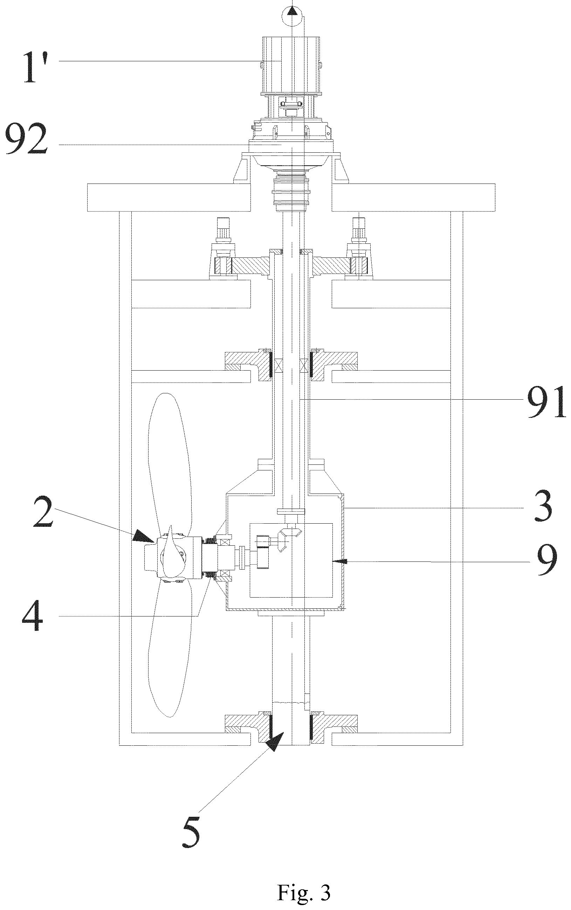

In the present embodiment, two horizontal-axis hydro turbines 2 and two water leak-proof devices 5 are provided, but the present disclosure is not limited thereto. In other embodiments, the number of horizontal-axis hydro turbines 2 in the water depth direction can be flexibly adjusted according to the distance between the bottom of the water and the water surface. In other embodiments, the number of horizontal-axis hydro turbines 2 and the number of water leak-proof devices 5 may both exceed two. At least two horizontal-axis hydro turbines 2 are located in one inner frame and are arranged in a direction perpendicular to the water surface P. As the direction shown in Fig. 3, the two horizontal-axis hydro turbines 3 are longitudinally arranged to realize the longitudinal expansion of the scale of the ocean energy power generation device along the depth of the ocean, which greatly increases the generation power and further overcomes the problem that the existing conventional ocean energy power generation devices cannot be large-scale.

Since each horizontal-axis hydro turbine 2 is correspondingly configured with one water leak-proof device 5, the upper water storage tank 51 can be provided with a through hole 511 to allow the lines, such as a water pipe, a cable and other wires, to pass therethrough. However, the present disclosure is not limited thereto. In other embodiments, the lines, such as the water pipe, the cable and other wires, can bypass the water storage tank 51 directly.

Fig. 3 is a schematic diagram of the ocean energy power generation device according to the third embodiment of the present disclosure. The horizontal-axis hydro turbine 2, the sealed cabin 3, the sealing ring 4, and the at least one water leak-proof device 5 of the present embodiment are the same as those of the first embodiment, and the same elements are given the same reference numerals. Only the differences are described below.

In the present embodiment, the generator 1' is located above the water surface. The ocean energy power generation device further includes a variable angle transmission mechanism 9 configured to connect the horizontal-axis hydro turbine 2 and the generator 1' and transmit the kinetic energy generated by the horizontal-axis hydro turbine 2 to the generator 1'. The function of the variable angle transmission mechanism 9 is to change the transmission angle/direction. The variable angle transmission mechanism 9 in the present embodiment is connected to the horizontal-axis hydro turbine 2 and the transmission shaft 91, and transmits the kinetic energy generated by the horizontally arranged horizontal-axis hydro turbine 2 to the transmission shaft 91 which is vertically arranged. Specifically, the horizontal-axis hydro turbine 2 rotates due to the impact of the water flow, and the generated kinetic energy is transmitted to the variable angle transmission mechanism 9 through the rotor of the horizontal-axis hydro turbine 2. At this point, the transmission direction of the kinetic energy is horizontal. Then, the variable angle transmission mechanism 9 changes the transmission angle/direction, so that the kinetic energy in the horizontal direction is transmitted to the vertically arranged transmission shaft 91. As one end of the transmission shaft 91 is connected to the generator 1, the kinetic energy is transmitted to the generator 1. The generator 1 converts the received kinetic energy into electrical energy for power generation.

In the present embodiment, the variable angle transmission mechanism 9 includes a plurality of gears and transmission rods, and the gears and the transmission rods interwork to change the transmission angle by 90 degrees. It is well known in the mechanical field to change the transmission angle or direction by the interworking of the gears and the transmission rods, which is not further described in detail hereinafter. Only one arrangement is shown in Fig. 3. However, the present disclosure is not limited thereto. The variable angle transmission mechanism 9 may include only a plurality of gears to achieve a 90-degree change in the transmission angle. Any transmission structure capable of achieving a 90-degree change in the transmission angle is within the scope of the variable angle transmission mechanism 9 of the present application.

In the present embodiment, the ocean energy power generation device further includes a gearbox, and one end of the transmission shaft 91 is connected to the generator 1 through the gearbox 92. In order to ensure the productive work efficiency of the generator 1, the gearbox 92 often needs to change engine oil. Both the gearbox 92 and the generator 1 of the present disclosure are located above the water surface, thereby greatly reducing the difficulty and cost of repair, maintenance and replacement.

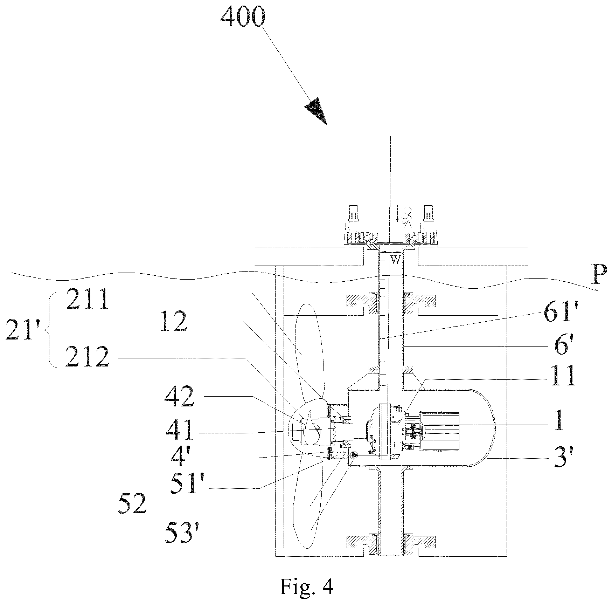

Fig. 4 is a schematic diagram of the ocean energy power generation device according to the fourth embodiment of the present disclosure. The generator 1, the speed increasing box 11, the liquid level sensor 52 of the present embodiment are the same as those of the first embodiment, and the same elements are given the same reference numerals. Only the differences are described below.

In the present embodiment, a sealing ring 4' is sealed in the manner of an end face seal. The end face seal is directly applied around an impeller rotor 21', so the seal structure on the left side of a sealed cabin 3' is slightly adjusted accordingly. In the present embodiment, a water storage tank 51' is still located below the horizontal-axis hydro turbine, whereas the water storage tank 51' is no longer located uprightly under the bottom opening of the sealed cabin 3', but on the left side of the entire sealed cabin 3' and close to the sealing ring 4'.

In the present embodiment, an ocean energy power generation device 400 further includes a water stop ring 41 located on the side of the impeller rotor 21' facing toward the sealed cabin 3'. In this embodiment, the water stop ring 41 is a rubber water stop ring that is sleeved on the rotating shaft of the horizontal-axis hydro turbine. When the sealing ring 4' is loose, water enters the sealed cabin 3' from the gap. Most of the leaking water directly drops into the water storage tank 51' due to gravity. A very small amount of water continues to move toward the sealed cabin 3' along the rotating shaft due to inertia. The water stop ring 41 is located in front of the bearing 12 (i.e. the left side shown in Fig. 4) and can effectively prevent the leaking water from entering the bearing 12 along the rotating shaft, further protecting the bearing 12 and other electrical components.

In the present embodiment, a water pump 53' is located in the sealed cabin 3'. However, there is no limit to the position of the water pump 53' in the present disclosure. As described in the first embodiment, the water pump 53' can be located above the water surface P.

When the horizontal-axis hydro turbine of the present embodiment is a variable pitch hydro turbine, the impeller rotor 21' includes a plurality of blades 211 and a hub 212. The ocean energy power generation device 400 further includes a plurality of blade sealing rings 42, and each blade sealing ring 42 is arranged at the connection portion of each blade 211 and the hub 212. However, the present disclosure is not limited thereto. In other embodiments, the horizontal-axis hydro turbine can be provided without the variable pitch, and accordingly the blade sealing ring is not additionally provided.

In the present embodiment, one end of the outer shaft 6' communicates with the sealed cabin 3', and the other end is located above the water surface P. Further, the outer shaft 6' has a particular inner diameter width W, thereby having sufficient space to allow maintenance personnel or a maintenance machine to enter the sealed cabin 3' through the outer shaft 6', and then to inspect, maintain (change the engine oil) or repair the electrical components in the sealed cabin 3'.

The specific numerical value of the inner diameter width W of the outer shaft in the present disclosure is not limited. If the maintenance operation is performed by a person, the inner diameter width W of the outer shaft should be enough for an adult to pass through, e.g. 1.5m or more. Accordingly, the inner wall of the outer shaft is provided with a ladder 61', facilitating the maintenance personnel to enter the sealed cabin 3' from the outer shaft. If the maintenance operation is performed by a robot or a machine, the inner diameter of the outer shaft only needs to be enough for the maintenance machine to pass through. There is no limit to the shape of the outer shaft 6' of the present disclosure. When the outer shaft 6' needs to rotate, the shape of the outer shaft is preferably circular, and the inner diameter width W at this time is the diameter of the inner circle of the ring. When the outer shaft 6' does not need to rotate, the shape of the outer shaft can also be square, and the inner diameter width W at this time is the inner side length of the square.

For the maintenance of all components in most of the existing ocean energy power generation devices, it is necessary to stop the power generation of the power generation device and then to check where the problem occurred in the water. Subsequently, the defective components are disassembled, removed and taken out of the water for maintenance. The components that cannot be disassembled can only be maintained and repaired in the water, which are highly difficult and costly to maintain and also very dangerous for the maintenance personnel. Further, it is not convenient to carry out inspections, and the maintenance personnel could only periodically shut down the power generation device to perform the inspections. The inventors of the present disclosure invented an ocean energy power generation device that can be modularly installed and maintained (seeing Chinese Patent Application No. CN105736221A). During maintenance, the entire hydro turbine and the frame serving as a module can be lifted from underwater to the water surface, which facilitates maintenance and inspection above the water surface. Nonetheless, due to the scale and weight of the ocean energy power generation device, each time the hydro turbine is lifted, it takes a lot of manpower and material resources, and some power generation devices are also required to stop power generation for maintenance. The maintenance costs are still relatively high.

In the ocean energy power generation device 400 of the present embodiment, the outer shaft 6' has a sufficient width W and one end of the outer shaft 6' is located above the water surface P, so the maintenance personnel or the maintenance machine can pass through the outer shaft and enter the interior of the ocean energy power generation device 400 from above the water surface P, and finally enter the sealed cabin 3' to maintain or repair all electrical components (including but not limited to the gearbox, the speed increasing box 11, and the generator 1) in the sealed cabin 3' and change engine oil for the components such as the bearing 12, the gearboxes and so on. By means of this arrangement, the whole maintenance process can be directly conducted under the water surface (but isolated from the water), without specially lifting the entire horizontal-axis hydro turbine above to the water surface for maintenance, thereby economizing the manpower and material resources required for maintenance and greatly cutting down the maintenance costs. Also, some components can be directly repaired and maintained without disassembly, which greatly lowers the difficulty in maintenance. Besides, the maintenance personnel or the maintenance machines can readily access into the interior of the power generation device 400 to inspect the electrical element, and find problems as early as possible, which overcomes the problem that the prior art is short of the beforehand inspection or the inspection can only be carried out after the power generation is stopped.

There is no limit to the number of horizontal-axis hydro turbines in the present embodiment. In practical applications, at least two horizontal-axis hydro turbines can be arranged in the water depth direction to make full use of ocean energy in the water depth direction. The water storage tank 51' in the present embodiment is arranged on the left side instead of the bottom of the sealed cabin 3'. Therefore, when there are two or more horizontal-axis hydro turbines in the water depth direction, the maintenance personnel can directly descend from the opening at the bottom of the sealed cabin 3' to the next lower sealed cabin without being obstructed by the water storage tank 51'.

The related features in the various embodiments of the present disclosure can be freely arranged and combined in light of actual requirements, which are all within the scope of the present disclosure. For example, the ocean energy power generation device 400 in the fourth embodiment may also have the variable angle transmission mechanism 9 in the third embodiment. Although the generator is located above the water surface, the maintenance personnel can still enter the sealed cabin from the outer shaft to conduct the repair and maintenance for other electrical components (such as gears of variable angle transmissions) in the sealed cabin. As another example, the ocean energy power generation device 400 in the fourth embodiment may also have the motor 7 in the first embodiment, and the motor 7 can drive the outer shaft to rotate to effectively adjust the load of the horizontal-axis hydro turbine. If the horizontal-axis hydro turbine is a variable pitch hydro turbine, the outer shaft either may rotate or may not rotate, and therefore the motor 7 may not be provided.

Particularly, the outer shaft in the fourth embodiment whose one end communicates with the sealed cabin, and the other end is located above the water surface to allow the maintenance personnel or the maintenance machine to pass through can be applied to any ocean energy power generation device. In other words, the ocean energy power generation device may be merely provided with the outer shaft mentioned in the fourth embodiment, without the water leak-proof device to facilitate maintenance and reduce maintenance cost and difficulty.

In conclusion, the present disclosure is provided with a water leak-proof device. Even if the sealing ring is slightly aging and loose, and the water leaks from the loose position of the sealing ring, the leaking water in the ocean energy power generation device will certainly not spread to the generator and the transmission module located in the sealed cabin of the horizontal-axis hydro turbine, thereby effectively ensuring the safety of the horizontal-axis hydro turbine and generator. Finally the frequency of repairing and replacing the sealing ring can be reduced, thereby greatly reducing the cost of maintenance and replacement, so that the normal power generation period of the ocean energy power generation device can be prolonged, the production benefits can be ensured, and the commercial application of the ocean energy power generation device is boosted.

In addition, in the ocean energy power generation device provided in the embodiment, the power generating part of the conventional horizontal-axis hydraulic generator and other electrical components, such as the speed increasing boxes, can be lifted from underwater to above the water surface by the transmission module and the variable angle transmission mechanism. Although the variable angle transmission mechanism has already existed in the mechanical field, in the field of ocean energy power generation, the persons skilled in the field have never considered that the power generating part of the horizontal-axis generator can be separated from the hydro turbine and can be lifted above the water surface. Those skilled in the field have been limited by the inherent mode to generate the technical prejudice that only the generator part of the vertical-axis hydraulic generator can be arranged above the water surface, and the generation power can merely be improved by modifying the design and arrangement of the blades in the horizontal-axis hydraulic generator. The present disclosure overcomes this technical prejudice and solves the problem that the horizontal-axis hydraulic generator in the prior art has difficulty in maintenance and replacement and high cost since all the electrical components are in the water. The power generating part in the embodiment is located above the water surface (other electrical components such as the speed increasing box can also be arranged above the water surface as needed). Therefore, the subsequent maintenance of the power generation device is conducted above the water surface, which greatly reduces the maintenance cost and further promotes the commercial application and promotion of ocean energy power generation devices.

Although the present disclosure has been disclosed above by the preferred embodiments, no limit is formed to the present disclosure. Any changes and modifications may be made by those skilled in the art without departing from the spirit and scope of the disclosure. The scope of the disclosure defined by the scope of the claims shall prevail.

## Claims

1. An ocean energy power generation water leak-proof device, applied to an ocean energy power generation device, **characterized in that** the ocean energy power generation water leak-proof device comprises:
a water storage tank, configured to accumulate water leaking into an interior of the ocean energy power generation device from an exterior; and
a water pump, configured to pump the water in the water storage tank out of the ocean energy power generation device.

2. The ocean energy power generation water leak-proof device according to claim 1, **characterized in that** the ocean energy power generation water leak-proof device further comprises a liquid level sensor arranged corresponding to the water storage tank to detect a water level in the water storage tank; and when the liquid level sensor detects the water level in the water storage tank reaches a preset value, the water pump operates to pump the water in the water storage tank out of the ocean energy power generation device.

3. The ocean energy power generation water leak-proof device according to claim 1 or 2, **characterized in that** the water storage tank is provided with a through hole to allow lines to pass therethrough.

4. An ocean energy power generation device, **characterized by** comprising:
a generator;
at least one horizontal-axis hydro turbine, comprising an impeller rotor and a transmission module, wherein kinetic energy generated by a rotation of the impeller rotor is transmitted to the generator through the transmission module;
a sealed cabin, wherein the transmission module is located in the sealed cabin, and the impeller rotor is located outside the sealed cabin;
a sealing ring, arranged at a connection portion of the impeller rotor and the sealed cabin;
at least one water leak-proof device arranged corresponding to the horizontal-axis hydro turbine, and wherein the at least one water leak-proof device comprises:
a water storage tank, configured to accumulate water leaking into an interior of the ocean energy power generation device from an exterior; and
a water pump, configured to pump the water in the water storage tank out of the ocean energy power generation device.

5. The ocean energy power generation device according to claim 4, **characterized in that** the ocean energy power generation device further comprises a liquid level sensor arranged corresponding to the water storage tank to detect a water level in the water storage tank; and when the liquid level sensor detects the water level in the water storage tank reaches a preset value, the water pump operates to pump the water in the water storage tank out of the ocean energy power generation device.

6. The ocean energy power generation device according to claim 4 or 5, **characterized in that** the generator is located inside the sealed cabin.

7. The ocean energy power generation device according to claim 4 or 5, **characterized in that** the generator is located above a water surface.

8. The ocean energy power generation device according to claim 4 or 5, **characterized in that** the ocean energy power generation device further comprises a variable angle transmission mechanism, and the variable angle transmission mechanism connects the horizontal-axis hydro turbine and the generator to transmit the kinetic energy generated by the horizontal-axis hydro turbine to the generator.

9. The ocean energy power generation device according to claim 4 or 5, **characterized in that** the ocean energy power generation device further comprises at least one outer shaft communicating with the sealed cabin; and when the outer shaft rotates, the outer shaft drives the horizontal-axis hydro turbine to change an orientation.

10. The ocean energy power generation device according to claim 9, **characterized in that** the ocean energy power generation device further comprises a motor connected to the outer shaft to drive the outer shaft to rotate.

11. The ocean energy power generation device according to claim 9, **characterized in that** the ocean energy power generation device further comprises a pressurization tube communicating with an interior of the outer shaft to increase a pressure in the outer shaft and the sealed cabin, such that an air pressure in the outer shaft and the sealed cabin is greater than a pressure of external seawater.

12. The ocean energy power generation device according to claim 4 or 5, **characterized in that** the number of the horizontal-axis hydro turbines and the number of the water leak-proof devices are both greater than or equal to two.

13. The ocean energy power generation device according to claim 4, **characterized in that** the ocean energy power generation device further comprises at least one outer shaft, one end of the outer shaft communicates with the sealed cabin, and the other end of the outer shaft is located above the water surface.

14. The ocean energy power generation device according to claim 4 or 5 or 13, **characterized in that** the outer shaft has a specific inner diameter width to allow maintenance personnel or a maintenance machine to enter the sealed cabin through the outer shaft for maintenance.

15. The ocean energy power generation device according to claim 4 or 5, **characterized in that** the ocean energy power generation device further comprises a water stop ring located on a side of the impeller rotor facing toward the sealed cabin.

16. The ocean energy power generation device according to claim 4 or 5, **characterized in that** the ocean energy power generation device further comprises a plurality of blade sealing rings, the impeller rotor comprises a plurality of blades and a hub, and each blade sealing ring is arranged at a connection portion of each blade and the hub.
